# EUROPEAN PATENT APPLICATION

(11) **EP 4 822 856 A1**
(43) Date of publication of application: **14.10.2026**
(21) Application number: 25907679.2
(22) Date of filing: 16.09.2025
(51) Int. Cl.: H01M 50/293, H01M 50/291, H01M 50/593, H01M 50/271, H01M 50/249

(54) **BATTERY MODULE**

(30) Priority: 17.12.2024 KR 20240188958
(71) Applicant: LG Energy Solution, Ltd., Seoul 07335 (KR)
(72) Inventor: KIM, Ji-Hyung, Daejeon 34122 (KR)
(74) Representative: Plasseraud IP
(86) International application number: PCT/KR2025/014387
(87) International publication number: WO 2026/134542

(57) **Abstract**

Disclosed is a battery module. The battery module includes an inner frame providing a space therein and containing a plastic material; a plurality of battery cells located within the inner frame; and an outer frame configured to cover the inner frame and containing a metal material.

## Description

### TECHNICAL FIELD

The present disclosure relates to a battery module.

The present application claims priority to Korean Patent Application No. 10-2024-0188958 filed on December 17, 2024 in the Republic of Korea, the disclosures of which are incorporated herein by reference.

### BACKGROUND ART

As the demand for portable electronic products such as smartphones, tablet PCs, and smart watches increases significantly and electric vehicles become increasingly widespread, research is actively being conducted on batteries installed the portable electronic products, especially secondary batteries that can be repeatedly charged and discharged.

Currently, commercially available secondary batteries include nickel-cadmium batteries, nickel-hydrogen batteries, nickel-zinc batteries, lithium secondary batteries and the like, and among them, lithium secondary batteries have little or no memory effect, and thus they are gaining more attention than nickel-based secondary batteries for their advantages that recharging can be done whenever it is convenient, the self-discharge rate is very low and the energy density is high.

Lithium secondary batteries primarily comprise lithium-based oxides and carbon materials for a positive electrode active material and a negative electrode active material, respectively. A lithium secondary battery includes an electrode assembly including a positive electrode plate and a negative electrode plate coated with the positive electrode active material and the negative electrode active material, respectively, with a separator interposed between the positive electrode plate and the negative electrode plate, and a sealed packaging or battery case accommodating the electrode assembly together with an electrolyte solution.

In general, lithium secondary batteries may be classified into can-type secondary batteries in which the electrode assembly is included in a metal can and pouch-type secondary batteries in which the electrode assembly is included in a pouch of an aluminum laminate sheet, according to the shape of the battery case.

Recently, secondary batteries have been widely used in medium and large devices such as electric vehicles and energy storage systems (ESSs) for driving and storing energy, as well as in small devices such as portable electronic devices. A plurality of secondary batteries may be electrically connected and stored inside a module case, thereby forming a battery module. At this time, each secondary battery included in one battery module may be called a battery cell. In addition, multiple battery modules may be connected to each other to form a battery pack.

However, if a plurality of battery modules are included in the battery pack as above and each battery module includes a plurality of battery cells, the battery pack may be vulnerable to a thermal chain reaction between battery modules or between battery cells. For example, if an event such as thermal runaway occurs inside one battery module, the thermal runaway needs to be prevented from propagating to other battery modules or other battery cells. If thermal runaway propagation between battery modules or battery cells is not properly prevented, an event occurring in a specific battery module or battery cell may cause a chain thermal reaction in other battery modules or other battery cells, which may cause an explosion or fire or enlarge the scale thereof.

In particular, if an event such as thermal runaway occurs in a battery module, gas or flame may be randomly discharged to the outside. At this time, if the discharge of gas or flame is not properly controlled, gas or flame may be discharged toward another battery module, which may cause a thermal chain reaction in other battery modules. In particular, a module terminal may exist at the front side of the battery module, and a component such as a module bus bar may exist for electrical connection with another battery module or battery pack. Accordingly, if flame is discharged to the front side of the battery module, the module terminal may be damaged inside the battery pack, causing an electrical short. In addition, since another battery module may exist at the front side of the battery module, if flame is discharged to the front side of a specific battery module, the discharged flame may be directed to another battery module, which may easily cause a fire to spread between battery modules.

If the thermal propagation between battery modules or battery cells is not properly controlled, the voltage drop of the battery module or battery pack may occur rapidly. This may cause a sudden shutdown of a device equipped with the battery module or battery pack, resulting in unexpected damage. For example, if a voltage drop of the battery pack occurs suddenly while an electric vehicle is in operation, it is impossible to secure sufficient time to move the electric vehicle to a safe location.

Moreover, if a fire or explosion occurs suddenly due to failure to properly control thermal propagation between battery modules or battery cells, there is a high possibility of causing casualties to users. For example, when thermal runaway occurs in an electric vehicle, if a certain amount of time is not secured before it progresses to a full-blown fire, the occupants may not be able to escape safely.

### DISCLOSURE

### Technical Problem

The present disclosure is designed to solve the problems of the related art, and therefore the present disclosure is directed to providing a battery module with improved rigidity to withstand impact or flame, and a battery pack and a vehicle including the same.

The present disclosure is also directed to providing a structure that may improve energy density by reducing the weight of the battery module.

The present disclosure is also directed to improving the electrical safety of the battery module by allowing the inner frame of the battery module to contain an electrical insulating material.

However, the technical problems that the present disclosure seeks to solve are not limited to the above, and other problems not mentioned herein will be clearly understood by those skilled in the art from the following disclosure.

### Technical Solution

In one aspect of the present disclosure, there is provided a battery module comprising: an inner frame providing a space therein and containing a plastic material; a plurality of battery cells located within the inner frame; and an outer frame configured to cover the inner frame and containing a metal material.

In addition, the outer frame may have a first opening configured to expose the inner frame.

In addition, the inner frame may include a bottom plate located below the plurality of battery cells; and a side plate extending from the bottom plate and configured to cover one side of the plurality of battery cells.

In addition, the outer frame may be configured to surround the inner frame.

In addition, the outer frame may include a bottom cover located below the bottom plate; a side cover configured to cover the side plate; and a top cover located on the plurality of battery cells.

In addition, the battery module may further comprise an insulation plate located between the top cover and the plurality of battery cells.

In addition, the top cover may have a second opening configured to expose the insulation plate.

In addition, the battery module may further comprise an end cover configured to cover a front side of the plurality of battery cells and coupled to the outer frame.

In addition, the battery module may further comprise a welding portion configured to couple the end cover and the outer frame.

A battery pack according to another aspect of the present disclosure includes the battery module according to the present disclosure.

A vehicle according to still another aspect of the present disclosure includes the battery module according to the present disclosure.

### Advantageous Effects

According to at least one of the embodiments of the present disclosure, the battery module may maintain a stable shape even when exposed to impact or flame.

According to at least one of the embodiments of the present disclosure, the energy density of a battery module may be improved.

According to at least one of the embodiments of the present disclosure, the electrical safety of a battery module may be improved.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram showing a battery pack according to an embodiment of the present disclosure.
FIG. 2 is an exploded view showing some components of the battery pack of FIG. 1.
FIG. 3 is an exploded view showing some components of the battery pack of FIG. 2.
FIG. 4 is a drawing showing the battery module of FIG. 3.
FIG. 5 is a drawing showing some components of the battery module of FIG. 3.
FIG. 6 is a drawing showing some components of the battery module of FIG. 5.
FIG. 7 is a drawing showing the coupling of the configuration of FIG. 6 and a bus bar frame assembly.
FIG. 8 is a drawing showing the coupling of the configuration of FIG. 7 and an inner frame.
FIG. 9 is a drawing showing the coupling of the configuration of FIG. 8 and a second insulation cover and the end cover.
FIGS. 10 to 12 are drawings showing the coupling of the configuration of FIG. 9 and an outer frame.
FIG. 13 is a diagram showing a vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

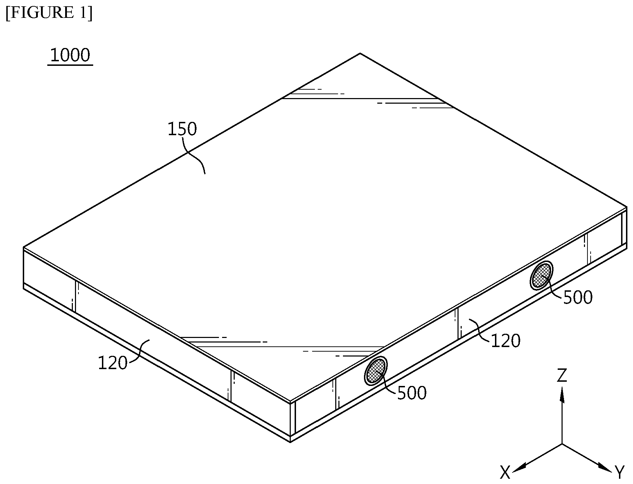

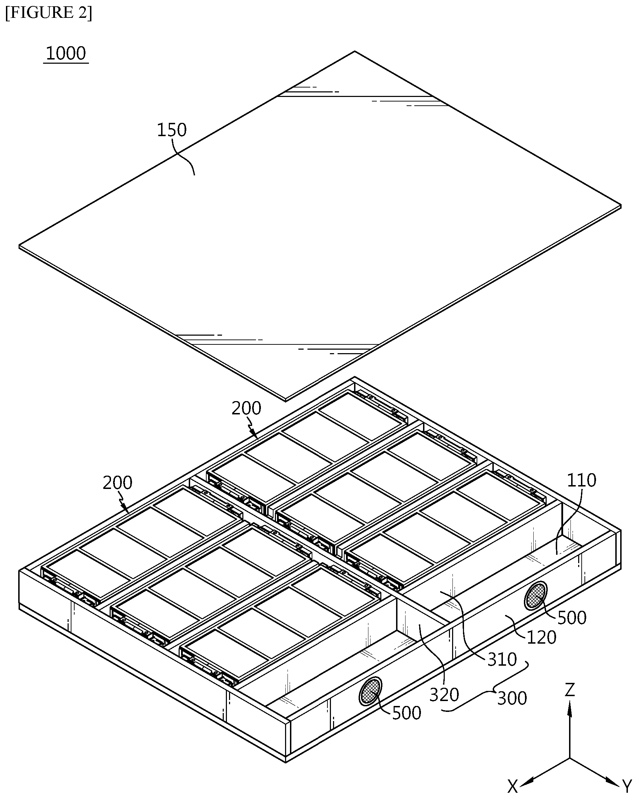

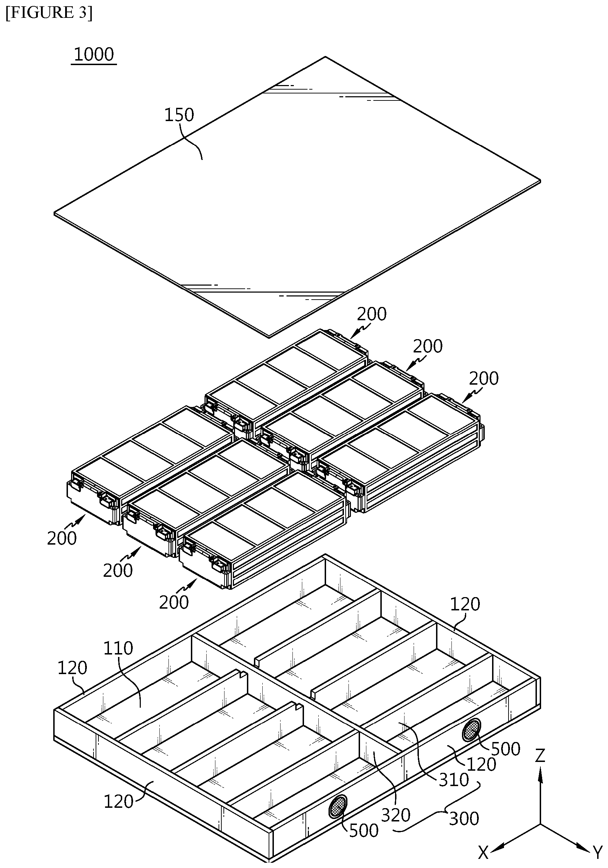

FIG. 1 is a diagram showing a battery pack 1000 according to an embodiment of the present disclosure. FIG. 2 is an exploded view showing some components of the battery pack 1000 of FIG. 1. FIG. 3 is an exploded view showing some components of the battery pack 1000 of FIG. 2.

Referring to FIGS. 1 to 3, the case 100 may provide a space therein. The case 100 may include a base plate 110. The base plate 110 may have a square shape. The base plate 110 may have a flat shape. The base plate 110 may form the outer appearance of the battery pack 1000. The base plate 110 may provide an inner space of the battery pack 1000.

The case 100 may include a side wall 120. The side wall 120 may be installed, fastened, fixed, coupled, or attached to the upper surface of the base plate 110. The side wall 120 may be provided along the perimeter of the base plate 110. For example, four side walls 120 may be provided. The side wall 120 may provide an inner space of the battery pack 1000.

The case 100 may include a pack cover 150. The pack cover 150 may have a square plate shape. The pack cover 150 may have a flat plate shape. The pack cover 150 may form the outer appearance of the battery pack 1000. The pack cover 150 may cover the inner space of the battery pack 1000. The pack cover 150 may be installed, fastened, fixed, coupled, or attached to the side wall 120.

The battery pack 1000 according to an embodiment of the present disclosure may include a partition wall 300. The partition wall 300 may include a first partition wall 310 and a second partition wall 320. The partition wall 300 may be provided in plurality. The partition wall 300 may be installed, fastened, fixed, coupled, or attached to the upper surface of the base plate 110. The partition wall 300 may partition the inner space of the battery pack 1000.

The first partition wall 310 may extend along the front and rear direction or the X-axis direction. The first partition wall 310 may be provided in plurality. The plurality of first partition walls 310 may be arranged along the right and left direction or the Y-axis direction.

The second partition wall 320 may extend along the right and left direction or the Y-axis direction. The plurality of first partition walls 310 may be arranged both sides of the second partition wall 320, respectively.

The battery module 200 may be placed inside the case 100. The battery module 200 may be installed, fastened, fixed, coupled, or attached to the upper surface of the base plate 110. The battery module 200 may be provided in plurality. For example, six battery modules 200 may be provided. The battery module 200 may be located in the space partitioned by the partition wall 300.

The venting device 500 may be installed on the side wall 120. For example, the venting device 500 may be installed on the right side wall 120. For example, the venting device 500 may be a gas valve. The venting device 500 may open to discharge gas when the pressure inside the case 100 increases. In addition, the venting device 500 may block external air from flowing into the case 100. The venting device 500 may be provided in plurality.

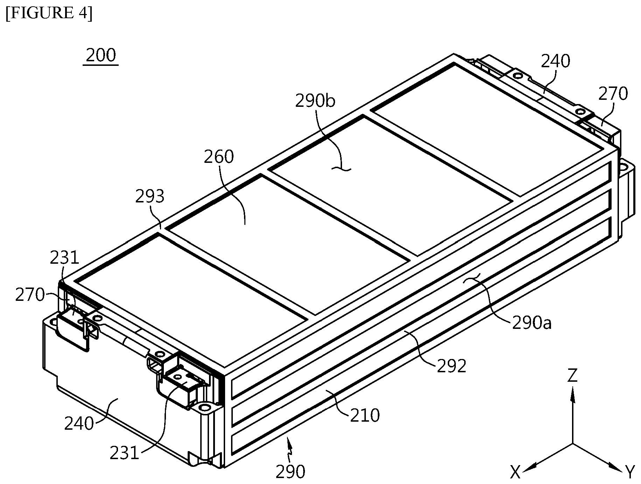

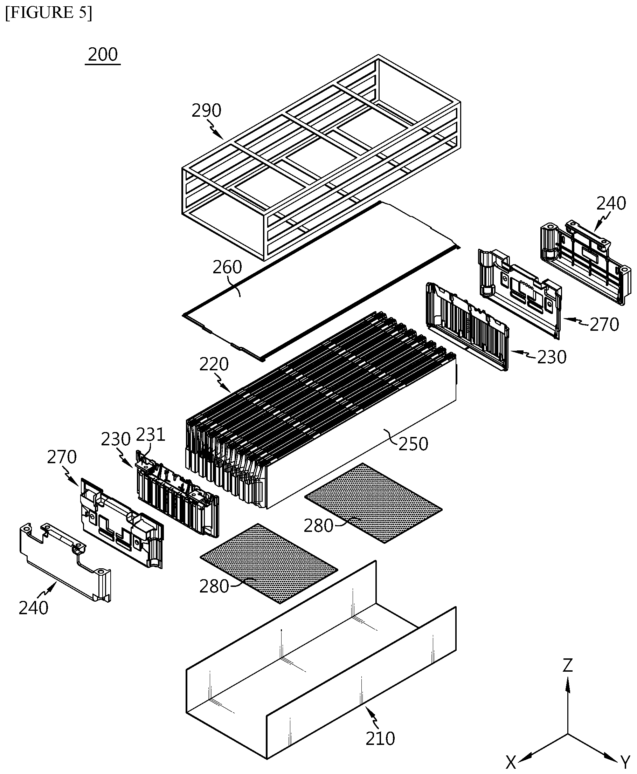

FIG. 4 is a drawing showing the battery module 200 of FIG. 3. FIG. 5 is a drawing showing some components of the battery module 200 of FIG. 3.

Referring to FIGS. 4 and 5, the battery module 200 may have a rectangular parallelepiped shape. The outer frame 290 may form the outer appearance of the battery module 200. The inner frame 210 may form the outer appearance of the battery module 200. The insulation plate 260 may form the outer appearance of the battery module 200.

The outer frame 290 may have a first opening 290a. The first opening 290a may expose the inner frame 210. The outer frame 290 may have a second opening 290b. The second opening 290b may expose the insulation plate 260.

The end cover 240 may form the outer appearance of the battery module 200. The end cover 240 may be provided as a pair. The end cover 240 may include a front end cover 240 and a rear end cover 240. The front end cover 240 may expose the power terminal 231.

The insulation cover 270 may form the outer appearance of the battery module 200. The insulation cover 270 may be provided as a pair. The insulation cover 270 may include a front insulation cover 270 and a rear insulation cover 270. The front insulation cover 270 may be arranged between the power terminal 231 and the front end cover 240. The front insulation cover 270 may electrically insulate the power terminal 231 and the front end cover 240.

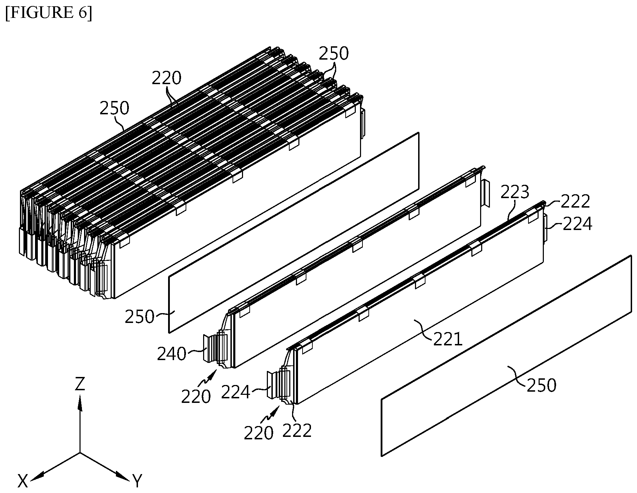

FIG. 6 is a drawing showing some components of the battery module 200 of FIG. 5.

Referring to FIGS. 4 to 6, the battery cell 220 may be accommodated inside the outer frame 290. The battery cell 220 may be accommodated inside the inner frame 210. The battery cell 220 may be provided in plurality. The battery cell 220 may refer to a secondary battery. In particular, the battery cell 220 may be a pouch-type secondary battery. However, the shape of the battery cell 220 is not limited to the pouch shape, and the battery cell 220 may have various shapes such as a cylindrical shape or a rectangular parallelepiped shape.

The plurality of battery cells 220 may be stacked along the right and left direction or the Y-axis direction. The battery cell 220 may include an accommodation portion 221 that accommodates an electrode assembly, a first sealing portion 222 protruding to the front and rear of the accommodation portion 221, and a second sealing portion 223 protruding to the top of the accommodation portion 221. Also, the battery cell 220 may include electrode leads 224 protruding to the front and rear of the first sealing portion 222, respectively. Each battery cell 220 may extend along the front and rear direction or the X-axis direction. The electrode leads 224 may protrude to the front and rear of each battery cell 220, respectively.

The pad 250 may be arranged between the plurality of battery cells 220. The pad 250 may be positioned between at least some of the battery cells 220 and/or at the periphery of the stack. For example, the pad 250 may be configured to be positioned between every two battery cells 220 stacked in the right and left direction.

The pad 250 may contain an elastic material to enable swelling absorption of the battery cell 220. For example, the pad 250 may be made of a foam material such as polyurethane. Alternatively, the pad 250 may contain a material capable of blocking heat or flames. For example, the pad 250 may contain an insulating or fire-retardant material such as silicone or mica.

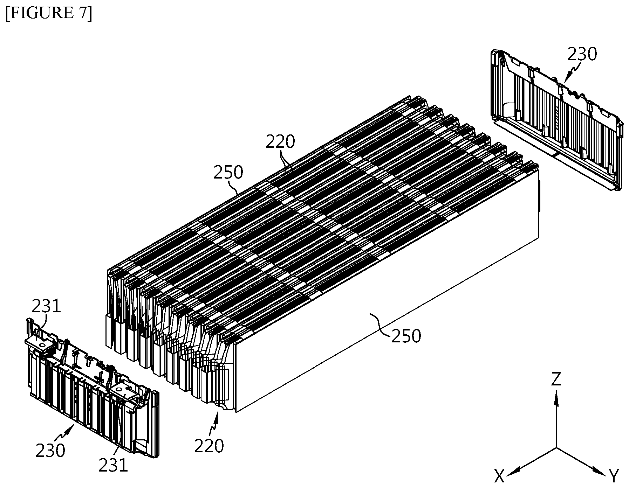

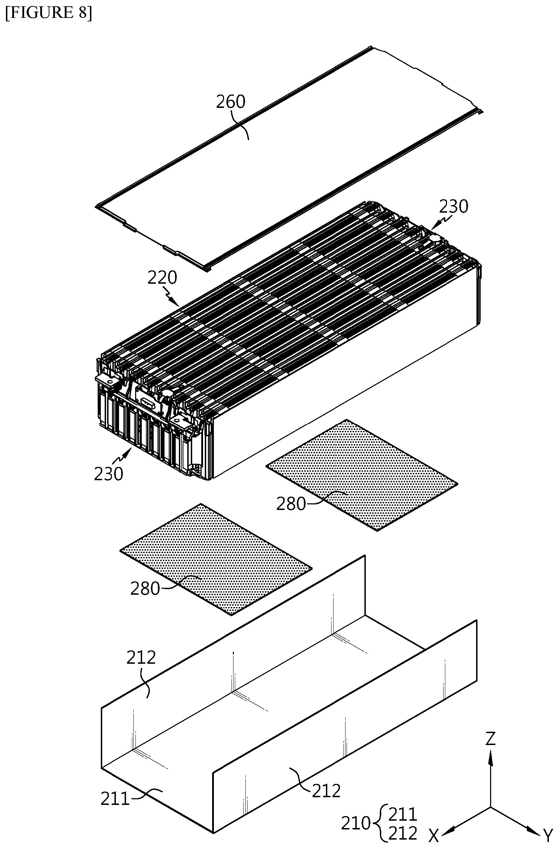

FIG. 7 is a drawing showing the coupling of the configuration of FIG. 6 and a bus bar frame assembly 230. FIG. 8 is a drawing showing the coupling of the configuration of FIG. 7 and an inner frame 210.

Referring to FIGS. 4 to 8, the front bus bar frame assembly 230 may be provided at the front side of the plurality of battery cells 220. The front bus bar frame assembly 230 may be electrically connected to the front electrode leads 224 of the plurality of battery cells 220. The front bus bar frame assembly 230 may include a power terminal 231.

The rear bus bar frame assembly 230 may be provided at the rear side of the plurality of battery cells 220. The rear bus bar frame assembly 230 may be electrically connected to the rear electrode leads 224 of the plurality of battery cells 220.

The inner frame 210 may include a bottom plate 211. The inner frame 210 may include a side plate 212. The side plate 212 may be provided as a pair. The side plate 212 may extend from the bottom plate 211. The inner frame 210 may be formed integrally. The inner frame 210 may also be referred to as a U-frame 210. The inner frame 210 may form the outer appearance of the battery module 200. The inner frame 210 may contain a plastic material. The inner frame 210 may have electrical insulation. The inner frame 210 may provide a space therein. The inner frame 210 may accommodate the plurality of battery cells 220. The plurality of battery cells 220 may be accommodated in the inner frame 210.

The bottom plate 211 may be located below the plurality of battery cells 220. The bottom plate 211 may cover the lower surface of the plurality of battery cells 220. The side plate 212 may cover one side of the plurality of battery cells 220. The pair of side plates 212 may cover both sides of the plurality of battery cells 220.

The heat transfer member 280 may be disposed between the bottom plate 211 and the plurality of battery cells 220. The heat transfer member 280 may contain a material having high thermal conductivity. For example, the heat transfer member 280 may contain a resin having high thermal conductivity. The heat transfer member 280 may be in contact with the upper surface of the bottom plate 211. The heat transfer member 280 may be in contact with the lower surface of the plurality of battery cells 220. The heat transfer member 280 may attach the plurality of battery cells 220 to the bottom plate 211.

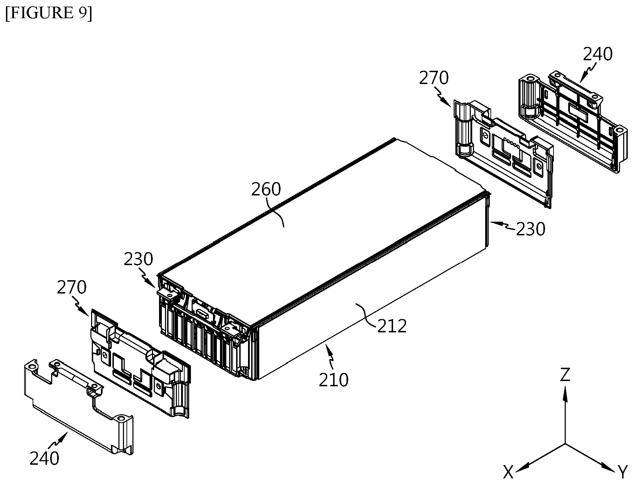

FIG. 9 is a drawing showing the coupling of the configuration of FIG. 8 and a second insulation cover 270 and the end cover 240.

Referring to FIGS. 4 to 9, the insulation plate 260 may be located on the plurality of battery cells 220. The insulation plate 260 may cover the upper surface of the plurality of battery cells 220. The insulation plate 260 may have a rectangular shape. The insulation plate 260 may be configured using a sheet having a thin thickness. The insulation plate 260 may have electrical insulation properties. For example, the insulation plate 260 may contain a plastic material.

The end cover 240 may be provided as a pair. The end cover 240 may have a square shape. The end cover 240 may contain a metal material. The front end cover 240 may be located at the front side of the front insulation cover 270. The front end cover 240 may cover the front insulation cover 270. The front end cover 240 may cover the front side of the plurality of battery cells 220. The rear end cover 240 may be located at the rear side of the rear insulation cover 270. The rear end cover 240 may cover the rear insulation cover 270. The rear end cover 240 may cover the rear side of the plurality of battery cells 220.

The insulation cover 270 may be provided as a pair. The insulation cover 270 may have a rectangular shape. The front insulation cover 270 may be located between the front end cover 240 and the front bus bar frame assembly 230. The front insulation cover 270 may electrically insulate the front bus bar frame assembly 230 and the front end cover 240. The rear insulation cover 270 may be located between the rear end cover 240 and the rear bus bar frame assembly 230. The rear insulation cover 270 may electrically insulate the rear bus bar frame assembly 230 and the rear end cover 240.

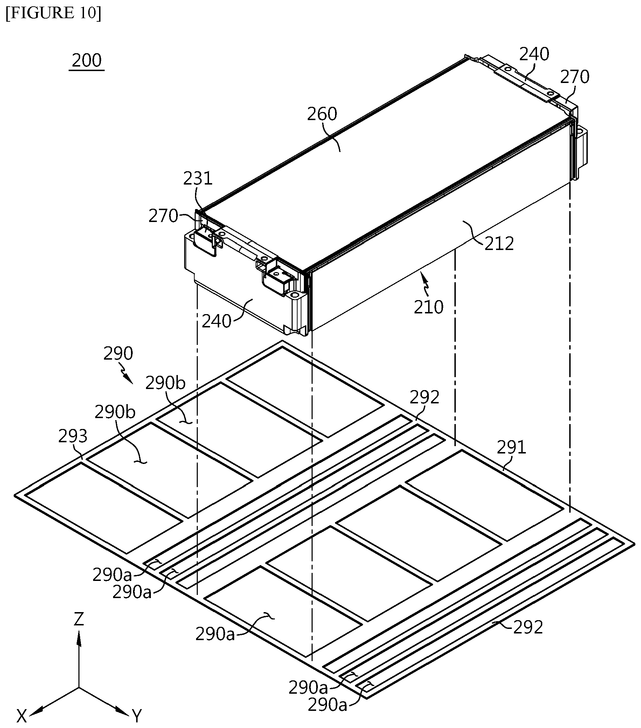

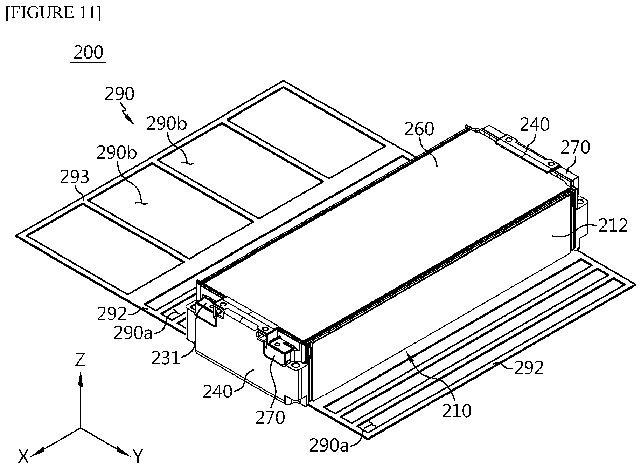

FIGS. 10 to 12 are drawings showing the coupling of the configuration of FIG. 9 and an outer frame 290.

Referring to FIGS. 10 to 12, the outer frame 290 may cover the inner frame 210. The outer frame 290 may be configured to surround the inner frame 210. The outer frame 290 may contain a metal material. The outer frame 290 may be configured by bending or folding a single plate. The outer frame 290 may be welded after being bent or folded. The top cover 293 and the side cover 292 of the outer frame 290 may be coupled by welding. The second welding portion W2 may couple the top cover 293 and the side cover 292.

The battery module 200 may have improved electrical safety by including the inner frame 210 and the outer frame 290 having electrical insulation. The battery module 200 may have improved rigidity by including the inner frame 210 and the outer frame 290 containing a metal material.

The outer frame 290 may include a bottom cover 291. The bottom cover 291 may be located below the bottom plate 211 of the inner frame 210. The bottom cover 291 may cover the bottom plate 211.

The outer frame 290 may include a side cover 292. The side covers 292 may be provided as a pair. The pair of side covers 292 may extend from the bottom cover 291. The side cover 292 may be located at the outer side of the side plate 212 of the inner frame 210. The side cover 292 may cover the side plate 212. The inner frame 210 may be arranged between the pair of side covers 292.

The outer frame 290 may include a top cover 293. The top cover 293 may be located on the insulation plate 260. The insulation plate 260 may be located between the top cover 293 and the plurality of battery cells 220. The insulation plate 260 may electrically insulate the top cover 293 and the plurality of battery cells 220.

The outer frame 290 may have a first opening 290a. The first opening 290a may expose the inner frame 210. The first opening 290a may be provided in plurality. The first opening 290a may be provided in the side cover 292. The first opening 290a of the side cover 292 may expose the side plate 212. The first opening 290a may be provided in the bottom cover 291. The first opening 290a of the bottom cover 291 may expose the bottom plate 211. By providing the first opening 290a, the outer frame 290 may reduce the weight of the battery module 200 and increase the energy density.

The outer frame 290 may have a second opening 290b. The second opening 290b may expose the insulation plate 260. The second opening 290b may be provided in plurality. The second opening 290b may be provided in the top cover 293.

The outer frame 290 may reduce the weight of the battery module 200 and increase the energy density by having the second opening 290b.

The end cover 240 may be fastened, attached, fixed, or coupled to the outer frame 290. The end cover 240 may contain a metal material, and the end cover 240 may be coupled to the outer frame 290 by welding. The first welding portion W1 may couple the end cover 240 and the outer frame 290.

The battery pack 1000 according to the present disclosure may further include various components other than the battery module 200, such as various battery pack components known at the time of filing of this application, such as a BMS, a bus bar, a relay, a current sensor, etc.

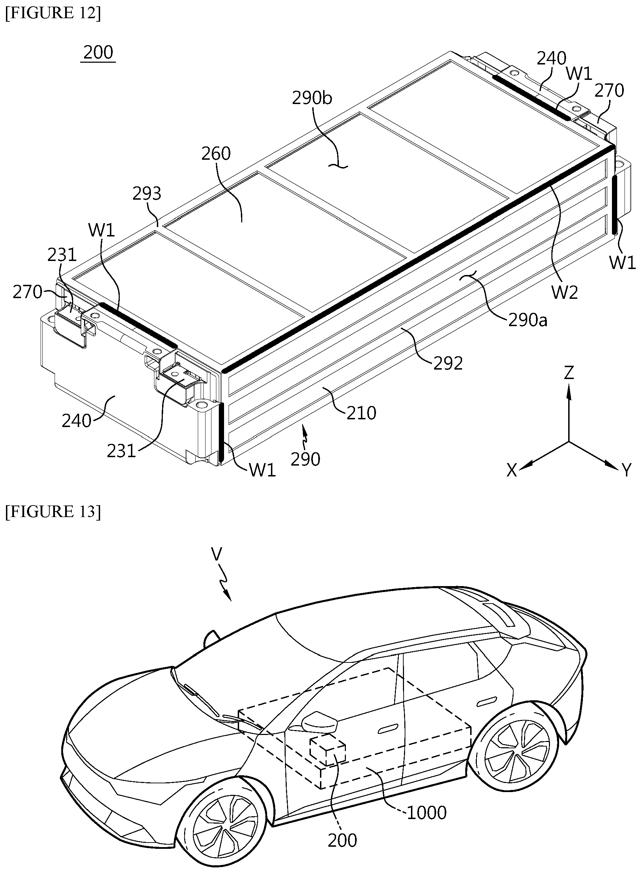

FIG. 13 is a diagram showing a vehicle V according to an embodiment of the present disclosure.

Referring to FIG. 13, the vehicle V according to the present disclosure may include the battery module 200 according to the present disclosure. The vehicle V according to the present disclosure may include the battery pack 1000 according to the present disclosure.

The battery module 200 or the battery pack 1000 according to the present disclosure may be applied to a vehicle V, such as an electric vehicle or a hybrid electric vehicle. The vehicle V according to the present disclosure may further include various other components included in the vehicle in addition to the battery module 200 or the battery pack 1000. For example, the vehicle V according to the present disclosure may further include a body, a motor, a control device such as an ECU (electronic control unit), etc.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

## Claims

1. A battery module comprising:
an inner frame providing a space therein and containing a plastic material;
a plurality of battery cells located within the inner frame; and
an outer frame configured to cover the inner frame and containing a metal material.

2. The battery module according to claim 1,
wherein the outer frame has a first opening configured to expose the inner frame.

3. The battery module according to claim 1,
wherein the inner frame includes:
a bottom plate located below the plurality of battery cells; and
a side plate extending from the bottom plate and configured to cover one side of the plurality of battery cells.

4. The battery module according to claim 3,
wherein the outer frame is configured to surround the inner frame.

5. The battery module according to claim 3,
wherein the outer frame includes:
a bottom cover located below the bottom plate;
a side cover configured to cover the side plate; and
a top cover located on the plurality of battery cells.

6. The battery module according to claim 5, further comprising:
an insulation plate located between the top cover and the plurality of battery cells.

7. The battery module according to claim 6,
wherein the top cover has a second opening configured to expose the insulation plate.

8. The battery module according to claim 1, further comprising:
an end cover configured to cover a front side of the plurality of battery cells and coupled to the outer frame.

9. The battery module according to claim 8, further comprising:
a welding portion configured to couple the end cover and the outer frame.

10. A battery pack comprising the battery module according to any one of claims 1 to 9.

11. A vehicle comprising the battery module according to any one of claims 1 to 9.
